Europäisches Patentamt

European Patent Office

Office européen des brevets

(19)

(11) **EP 1 026 565 B1**

(12) **FASCICULE DE BREVET EUROPEEN**

(45) Date de publication et mention
de la délivrance du brevet:
**17.03.2004 Bulletin 2004/12**

(51) Int Cl.⁷: **G05D 1/08**, B64C 13/50

(21) Numéro de dépôt: **00400285.3**

(22) Date de dépôt: **03.02.2000**

(54) **Système pour la commande en lacet d'un aéronef**

Vorrichtung zur Steuerung des Gierwinkels eines Flugzeuges

Yaw control system for an aircraft

(84) Etats contractants désignés:
**DE ES GB IT SE**

(30) Priorité: **04.02.1999 FR 9901300**

(43) Date de publication de la demande:
**09.08.2000 Bulletin 2000/32**

(73) Titulaire: **AIRBUS France
31060 Toulouse (FR)**

(72) Inventeur: **Larramendy, Panxika
31500 Toulouse (FR)**

(74) Mandataire: **Bonnetat, Christian
CABINET BONNETAT
29, rue de St. Pétersbourg
75008 Paris (FR)**

(56) Documents cités:
**EP-A- 0 742 141        FR-A- 2 617 120
US-A- 4 094 479        US-A- 4 935 682**

**Description**

La présente invention concerne un système pour la commande en lacet d'un aéronef, notamment d'un avion de transport civil.

Par le brevet FR-2 617 120 de la demanderesse, on connaît un système pour la commande en roulis et en lacet d'un aéronef, mettant en oeuvre des commandes de vol électriques.

En ce qui concerne notamment la commande en lacet, ce système connu comporte :

- un organe de commande (palonnier), pour la commande en lacet, susceptible d'être actionné par un pilote de l'aéronef ;
- un transducteur délivrant des signaux électriques PE dépendant de la position dudit organe de commande et représentatifs d'une direction commandée ;
- des premiers moyens délivrant des signaux électriques représentatifs respectivement de l'assiette latérale commandée $\Phi c$, de la vitesse de roulis $\underline{p}$, de l'assiette latérale effective $\Phi$, de la vitesse de lacet $\underline{r}$ et du dérapage latéral $\beta$ dudit aéronef;
- une unité de calcul élaborant :

  . un ordre électrique dr de commande en lacet, à partir de la relation :

  $$dr = Ka.\Phi c + Kb.p + Kc.\Phi + Kd.r + Ke.\beta$$

  dans laquelle :

  ◊   $\Phi c$, p, $\Phi$, r et $\beta$ sont les valeurs délivrées par lesdits premiers moyens, et
  ◊   Ka, Kb, Kc, Kd et Ke sont des gains, dont les valeurs sont susceptibles d'être fixées par des deuxièmes moyens à des valeurs nominales ; et

  . un ordre électrique dpequi de commande en roulis (devant être transmis à des ailerons et des spoilers dudit aéronef), à partir de la relation :

  $$dpequi = ka1. \Phi c + kb1.p + kc1. \Phi + kd1.r + ke1.\beta + kf.PE,$$

  ka1, kb1, kc1, kd1, ke1 et kf étant des gains ; et

- un dispositif de transmission, de type mécanique, permettant de combiner ledit ordre électrique dr de commande en lacet et un ordre mécanique qui provient directement de l'organe de commande par l'intermédiaire d'une transmission mécanique et qui est représentatif de la position dudit organe de commande, pour délivrer un ordre unique combiné de commande en lacet qui est destiné à commander une gouverne de direction de l'aéronef.

Ce système de commande en lacet usuel présente de nombreux avantages et, en particulier, il permet de réduire la charge de travail du pilote. De plus, il permet d'assurer :

- un bon amortissement du roulis hollandais ;
- une bonne coordination entre le roulis et le lacet, notamment par la prise en compte des assiettes latérales commandée et effective et de la vitesse de roulis dans le calcul de l'ordre électrique dr de commande en lacet ; et
- un comportement sain de l'aéronef au décollage.

Toutefois, l'efficacité de ce système connu peut être améliorée en cas de panne d'un des moteurs de l'aéronef, en particulier en ce qui concerne le contrôle lacet/roulis, et ceci notamment dans des configurations de vol non lisses de l'aéronef, c'est-à-dire pour lesquelles des moyens hypersustentateurs, tels que des volets hypersustentateurs, prévus pour l'atterrissage et le décollage, sont activés.

De plus, on sait qu'il est recommandé, avec des systèmes de commande de ce type, en cas de panne d'un moteur en phase d'approche, de réaliser les manoeuvres d'approche sans utiliser l'automanette. En effet, lorsque l'automanette est engagée, le couple de lacet induit par les variations de poussée du ou des moteurs non en panne perturbe le comportement de l'aéronef et augmente la charge de travail du pilote, au lieu de la réduire.

La présente invention a pour objet de remédier à ces inconvénients. Elle concerne un système de commande en lacet d'un aéronef, qui permet d'améliorer le contrôle en lacet en cas de panne d'un moteur, en particulier dans les phases de décollage et d'atterrissage, tout en conservant un comportement de l'aéronef proche du nominal, notamment au décollage.

A cet effet, selon l'invention, le système de commande en lacet, du type précité, pour un aéronef muni d'une pluralité de moteurs est remarquable en ce qu'il comporte de plus des troisièmes moyens pour détecter toute panne d'un desdits moteurs de l'aéronef, et en ce que lesdits deuxièmes moyens sont formés de manière à augmenter la valeur du gain Kd relatif à la vitesse de lacet $\underline{r}$ et à modifier les valeurs des gains Ka et Ke relatifs respectivement à l'assiette latérale commandée $\Phi c$ et au dérapage latéral $\beta$, lors de la détection par lesdits troisièmes moyens d'une panne d'un moteur de l'aéronef.

Ainsi, selon l'invention, lors d'une panne d'un moteur, les gains relatifs à l'assiette latérale commandée et au dérapage latéral sont modifiés et le gain relatif à la vitesse de lacet est augmenté, de sorte que ledit système de commande engendre un ordre de braquage de la gouverne de direction, qui est d'autant plus important que la vitesse de lacet et/ou le dérapage latéral sont élevés et qui permet ainsi de s'opposer, efficacement et automatiquement, à toute perturbation en lacet et en dérapage, induite par la panne du moteur, ce qui permet de remédier aux inconvénients précités.

De plus, pour avoir un comportement en roulis similaire à la loi latérale nominale, avantageusement, lesdits deuxièmes moyens sont formés de manière à modifier les valeurs des gains Ka1 et Kf de l'ordre électrique dpequi de commande en roulis, relatifs respectivement à l'assiette latérale commandée $\Phi c$ et à la direction commandée, lors de la détection par lesdits troisièmes moyens d'une panne d'un moteur de l'aéronef, de manière à permettre à l'aéronef de conserver le même comportement en roulis malgré la panne.

Le système de commande conforme à l'invention présente d'autres avantages et, en particulier, il assure :

- une homogénéité dans toutes les phases de vol ;
- une conservation des procédures et des manoeuvres de pilotage usuelles, c'est-à-dire qu'il ne modifie pas le pilotage ; et
- une mise en oeuvre fiable, qui est indépendante notamment de la vitesse de l'aéronef ou de l'importance de la dissymétrie induite par la panne d'un moteur.

En outre, de façon avantageuse, le système de commande conforme à l'invention comporte des quatrièmes moyens pour déterminer la configuration de vol actuelle de l'aéronef.

Par ailleurs, avantageusement, lesdits troisièmes moyens sont formés de manière à détecter une panne d'un moteur, pour un aéronef muni de deux moteurs :

- condition 1 : si le paramètre N1 (vitesse de rotation du module basse pression) d'un moteur est supérieur à une valeur prédéterminée et si la différence des paramètres N1 des deux moteurs est supérieure à une valeur prédéterminée, ce qui permet de détecter une panne d'un moteur en phase de décollage ; et
- condition 2 : si la différence des paramètres N1 des deux moteurs est supérieure à une valeur prédéterminée et si une seconde condition caractéristique est vérifiée, par exemple le paramètre N2 (vitesse de rotation du module haute pression) dudit moteur est inférieur à une valeur prédéterminée, un moteur est au ralenti, une alimentation en carburant est coupée ou un système de contrôle du moteur n'est pas alimenté, ce qui permet de détecter une panne d'un moteur en phase d'approche ou de décollage.

Selon l'invention, lesdits deuxièmes moyens réalisent une modification, en particulier une augmentation, des valeurs des gains, en fonction de la configuration de vol effective de l'aéronef. On précisera à cet effet, ci-après, des valeurs préférées des gains, en fonction de différentes configurations de vol possibles.

De plus, de préférence, le système conforme à l'invention comporte des moyens d'action prioritaire qui sont formés de manière à agir sur lesdits deuxièmes moyens de sorte que ces derniers modifient les valeurs des gains précités, en cas de panne d'un moteur, uniquement lorsque l'aéronef est en vol et qu'il se trouve dans une configuration de vol, non lisse.

En outre, avantageusement, lesdits deuxièmes moyens sont formés de manière à remodifier les valeurs des gains, modifiées précédemment à la suite d'une panne d'un moteur, pour revenir auxdites valeurs nominales, au moins lorsque l'une des conditions suivantes est réalisé :

- l'aéronef passe en configuration lisse ;
- le moteur initialement en panne ne l'est plus et toutes les commandes "moteur" de l'aéronef ne sont plus au ralenti depuis au moins une durée prédéterminée ; et
- pour une altitude de l'aéronef inférieure à une altitude prédéterminée, le moteur précédemment en panne ne l'est que pour la condition 2 précitée et pas pour la condition 1 précitée, et la position dudit organe de commande dépasse une position prédéterminée.

On notera que, par l'action amplificatrice conforme à l'invention, la gouverne de direction est beaucoup plus sollicitée et répond de manière plus vive à toute variation en lacet et/ou en dérapage. Aussi, pour des raisons à la fois de confort et de fatigue de ladite gouverne de direction, l'action amplificatrice prévue par la présente invention est commandée, de préférence, uniquement en cas de panne d'un moteur, et pour les phases de vol de configuration non lisse, c'est-à-dire au décollage et à l'atterrissage.

Par ailleurs, pour concilier un double objectif en phase d'approche, à savoir, d'une part, conserver une autorité pour l'action de l'organe de commande, en particulier pour permettre le cas échéant de ramener le vecteur vitesse de l'aéronef dans l'axe de ce dernier, et, d'autre part, maintenir l'action amplificatrice conforme à l'invention jusqu'au sol, en particulier pour ne pas perturber le pilote à l'atterrissage, de façon avantageuse, les deuxièmes moyens sont formés de manière à remodifier, de façon progressive, les valeurs des gains Kd et Ke, modifiées précédemment à la suite d'une panne d'un moteur, pour revenir auxdites valeurs nominales, lorsque les conditions suivantes sont réalisées simultanément :

- l'aéronef se trouve à une altitude qui est inférieure à une altitude prédéterminée ;
- la position dudit organe de commande est située à l'extérieur d'une gamme de positions prédéterminée ; et
- seule la condition 2 précitée est vraie (pas la condition 1).

Dans le cadre de la présente invention, pour savoir si l'aéronef se trouve ou non au-dessous de ladite altitude prédéterminée, on peut bien entendu mesurer directement son altitude effective, par exemple au moyen de radioaltimètres. Toutefois, on peut également utiliser à cet effet, de façon complémentaire ou en variante, d'autres informations disponibles telles que la position des becs et des volets ou la position des trains d'atterrissage.

En outre, notamment pour des raisons de confort, avantageusement, les deuxièmes moyens sont formés de manière à modifier, c'est-à-dire à augmenter et/ou à baisser, toujours de façon progressive les valeurs des différents gains, devant être modifiées lors de la mise en oeuvre de la présente invention.

Les figures du dessin annexé feront bien comprendre comment l'invention peut être réalisée. Sur ces figures, des références identiques désignent des éléments semblables.

La figure 1 montre, en perspective du dessus, un aéronef, en l'occurrence un avion civil gros porteur, équipé d'un système de commande en lacet conforme à l'invention.

La figure 2 représente le schéma synoptique d'un système de commande conforme à l'invention.

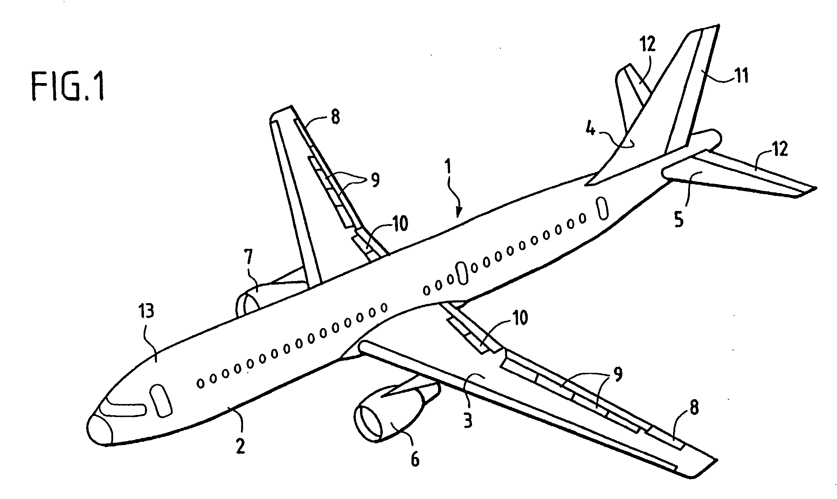

L'avion civil gros porteur 1, montré en perspective sur la figure 1, comporte un fuselage 2, des ailes 3, un empennage vertical 4 et un empennage horizontal 5. Il est propulsé par deux moteurs 6 et 7, accrochés sous les ailes 3. Bien entendu, dans le cadre de la présente invention, l'avion peut être propulsé par un nombre différent de moteurs.

Sur l'extrados des ailes 3 sont prévus des ailerons 8 de bord de fuite, des volets déporteurs 9, encore appelés spoilers, et des aérofreins 10. Sur l'empennage vertical 4 est prévue une gouverne de direction 11, tandis que des gouvernes de profondeur 12 sont articulées sur le bord de fuite de l'empennage horizontal 5.

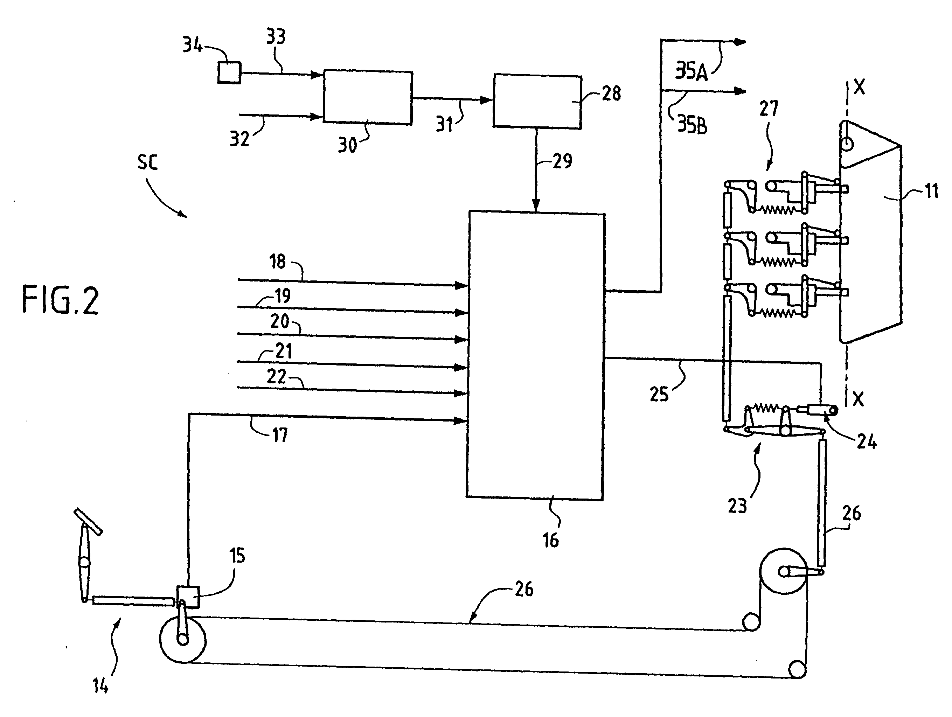

De façon connue, la commande en lacet dudit avion est réalisée au moyen de la gouverne de direction 11. A cette fin, dans le poste de pilotage 13 dudit avion 1, est prévu au moins un organe de commande, en l'occurrence un palonnier 14, à la disposition d'un pilote (voir la figure 2). Ledit palonnier 14 commande la gouverne de direction 11 en rotation autour de son axe de rotation X-X.

La présente invention ne concerne que la commande de la gouverne de direction 11, des ailerons 8 et des volets déporteurs 9, de sorte que les commandes des aérofreins 10, des gouvernes de profondeur 12 et éventuellement de l'empennage horizontal 5 ne seront pas décrites.

Comme le montre la figure 2, le système SC de commande en lacet comporte, de façon connue, en plus du palonnier 14 :

- un transducteur 15 délivrant des signaux électriques PE dépendant de la position dudit palonnier 14 et représentatifs d'une direction commandée ;
- une unité de calcul 16 reliée par une liaison 17 au transducteur 15 et susceptible d'élaborer un ordre électrique dr de commande en lacet et un ordre électrique dpequi de commande en roulis, précisés ci-dessous ;
- des moyens non représentés et précisés ci-dessous, pour délivrer et transmettre à l'unité de calcul 16, respectivement par l'intermédiaire de liaisons 18 à 22, des signaux électriques représentatifs respectivement de l'assiette latérale commandée $\Phi c$, de la vitesse de roulis $\underline{p}$ (encore appelée taux de roulis), de l'assiette latérale effective $\Phi$, de la vitesse de lacet $\underline{r}$ (encore appelée taux de lacet) et du dérapage latéral $\beta$ dudit avion 1 ;
- un dispositif de transmission 23 permettant de combiner :

- ledit ordre électrique dr de commande en lacet élaboré par l'unité de calcul 16 et reçu par l'intermédiaire de moyens d'actionnement 24 (par exemple des vérins) qui sont reliés à la sortie de l'unité de calcul 16, comme illustré par une liaison 25 ; et
- un ordre mécanique qui provient directement du palonnier 14 par l'intermédiaire d'une transmission mécanique 26 reliant le dispositif de transmission 23 audit palonnier 14 et qui est représentatif de la position de ce dernier. Ce dispositif de transmission 23 délivre ainsi un ordre unique combiné de commande en lacet ;

- une liaison mécanique 27 reliée audit dispositif de transmission 23 et permettant d'actionner la gouverne de direction 11, autour de l'axe X-X, selon ledit ordre unique combiné de commande en lacet ; et
- une liaison électrique dédoublée 35A et 358, pour transmettre l'ordre électrique dpequi à des organes d'actionnement (non représentés) respectivement des ailerons 8 et des spoilers 9.

Dans un mode de réalisation préféré non représenté :

- la liaison 18 est reliée à la sortie d'un transducteur associé à un manche de commande en roulis de l'avion 1 et élaborant un signal calculé à partir de la position de ce manche de commande ;
- les liaisons 19 à 21 sont reliées à une centrale inertielle de l'avion 1 ; et
- la liaison 22 est reliée à un calculateur usuel chargé d'estimer, de façon connue, la valeur du dérapage latéral $\beta$.

De plus, l'unité de calcul 16 détermine les ordres électriques dr et dpequi de commande respectivement en lacet et en roulis, à partir des relations :

$$dr = Ka.\Phi c + Kb.p + Kc.\Phi + Kd.r + Ke.\beta$$

$$dpequi = Ka1.\Phi c + Kb1.p + Kc1.\Phi + Kd1.r + ke1.\beta + Kf.PE$$

dans lesquelles :

- PE, $\Phi c$, p, $\Phi$, r et $\beta$ sont les valeurs précitées et reçues respectivement par l'intermédiaire des liaisons 17 à 22 ;
- Ka, Kb, Kc, Kd, Ke, Ka1, Kb1, Kc1, Kd1, Ke1 et Kf sont des gains, dont les valeurs peuvent être fixées par une unité de calcul 28 qui est reliée par une liaison 29 à l'unité de calcul 16.

Selon l'invention, ledit système de commande SC comporte de plus des moyens 30 reliés par une liaison 31 à l'unité de calcul 28, pour détecter toute panne d'un desdits moteurs 6 et 7 de l'avion 1, et ladite unité de calcul 28 est formée de manière à augmenter la valeur du gain Kd relatif à la vitesse de lacet r̲ et à modifier les valeurs des gains Ka et Ke relatifs respectivement à l'assiette latérale commandée $\Phi c$ et au dérapage latéral $\beta$, lors de la détection par lesdits troisièmes moyens d'une panne d'un moteur de l'aéronef.

Ainsi, grâce à cette modification des gains Ka, Kd et Ke, lors d'une panne d'un moteur 6 ou 7, le système de commande SC engendre un braquage approprié (suite à une modification de l'ordre électrique dr dépendant desdits gains Ka, Kd et Ke) de la gouverne de direction 11, qui est notamment d'autant plus important que la vitesse de lacet r̲ est élevé. Ce braquage approprié permet de s'opposer, efficacement et automatiquement, à toute excursion en dérapage et/ou en lacet, induite par une panne d'un moteur 6 ou 7.

De plus, pour avoir un comportement en roulis, lors d'une panne d'un moteur 6 ou 7 similaire à la loi latérale nominale, lesdits deuxièmes moyens 28 sont formés de manière à modifier les valeurs des gains Ka1 et Kf de l'ordre électrique dpequi, relatifs respectivement à l'assiette latérale commandée $\Phi c$ et à la direction commandée, lors de la détection par lesdits troisièmes moyens 30 d'une panne d'un moteur 6, 7 de l'avion 1, de manière à permettre à l'avion 1 de conserver sa configuration en roulis malgré la panne.

Selon l'invention, l'importance de la modification des valeurs des gains Ka, Kd, Ke, Ka1 et Kf dépend de la configuration de vol de l'avion 1 au moment de la modification.

A cet effet, ledit système de commande SC comporte de plus des moyens 34, de type usuel, reliés par une liaison 33 aux moyens 30, pour déterminer la configuration de vol effective de l'avion 1.

A titre de mise en oeuvre préférée, on précise ci-après les valeurs modifiées des différents gains précités, pour les différentes configurations connues suivantes, qui dépendent de la position des becs et des volets 9 de l'avion 1 :

- une "configuration 0", non hypersustentée ;
- une "configuration 1", peu hypersustentée ;

- une "configuration 1 + F", moyennement hypersustentée ; et
- des "configurations 2, 3 et Full", très hypersustentées.

Ces différentes configurations de vol correspondent aux positions suivantes des becs et des volets 9 (les positions des becs et des volets 9 variant, de façon connue, progressivement d'une valeur 0 correspondant à une rentrée complète de ces derniers, jusqu'à des valeurs 23 et 32 correspondant à une sortie complète respectivement des becs et des volets) :

| Configuration | Position des becs | Position des volets 9 |
|---|---|---|
| "0" | 0 | 0 |
| "1" | 16 | 0 |
| "1 + F" | 16 | 8 |
| "2" | 20 | 14 |
| "3" | 23 | 22 |
| "Full" | 23 | 32 |

Selon l'invention, lors de leur modification, les gains Ka, Kd et Ka1 sont multipliés respectivement par des coefficients F1, F2 et F3 qui vérifient les valeurs suivantes, en fonction de la configuration de vol effective de l'avion 1 :

| Configuration | F1 | F2 | F3 |
|---|---|---|---|
| "0" | 1 | 1 | 1 |
| "1" | 1 | 1,5 | 1,15 |
| "1 + F" | 1 | 2 | 1,3 |
| "2" | 1 | 3 | 1,7 |
| "3" | 0,95 | 3 | 1,6 |
| "Full" | 0,9 | 3 | 1,6 |

Quant au gain Ke, il est remplacé, lors de sa modification, par les valeurs suivantes dépendant de la configuration de vol :

| Configuration | "0" | "1" | "1 + F" | "2" | "3" | "Full" |
|---|---|---|---|---|---|---|
| Valeur | 0 | 0 | -0,5 | -1 | -1 | -1 |

Par ailleurs, on sait que la valeur du gain Kf dépend, lors d'une commande usuelle, de deux variables qui sont la vitesse Vc par rapport à l'air (en noeuds) et la configuration de vol, comme indiqué dans le tableau suivant :

| Vc / Configuration | 100 | 130 | 170 | 210 | 250 | 340 |
|---|---|---|---|---|---|---|
| "0" | 0,5 | 0,5 | 0,5 | 0,35 | 0,23 | 0 |
| "1" | -0,2 | -0,2 | -0,3 | -0,25 | -0,25 | -0,25 |
| "2" | 0,14 | 0,14 | 0,08 | -0,01 | -0,01 | -0,01 |
| "3" | 0,1 | 0,2 | 0,32 | 0,35 | 0,35 | 0,35 |
| "full" | 0,1 | 0,15 | 0,16 | 0,2 | 0,2 | 0,2 |

Lors de la mise en oeuvre de la présente invention, les moyens 28 modifient, en cas de panne d'un moteur 6 ou 7, la valeur du gain Kf de sorte que ce dernier présente alors l'une des valeurs indiquées dans le tableau suivant :

| Vc / Configuration | 100 | 130 | 170 | 210 | 250 | 340 |
|---|---|---|---|---|---|---|
| "0" | 0,5 | 0,5 | 0,5 | 0,35 | 0,23 | 0 |
| "1" | 0,1 | 0,1 | 0,1 | 0,2 | 0,2 | 0,2 |
| "2" | 0 | 0,1 | 0,2 | 0,3 | 0,3 | 0,3 |
| "3" | 0 | 0,1 | 0,2 | 0,2 | 0,2 | 0,2 |
| "full" | 0,1 | 0,2 | 0,2 | 0,2 | 0,2 | 0,2 |

En outre, les moyens 30 qui reçoivent des informations appropriées par une liaison 32 détectent une panne d'un moteur, par exemple le moteur 6, de préférence lorsque :

- condition 1 : le paramètre N1 dudit moteur 6 est supérieur à une valeur prédéterminée, par exemple 80%, et la différence des paramètres N1 des deux moteurs 6 et 7 est supérieure à une valeur prédéterminée, par exemple 30%, ce qui permet de détecter une panne du moteur 6 en phase de décollage ; et
- condition 2 : la différence des paramètres N1 des deux moteurs 6 et 7 est supérieure à une valeur prédéterminée, par exemple 20%, et une seconde condition caractéristique est vérifiée, par exemple le paramètre N2 du moteur 6 est inférieur à 50%, le moteur 6 est au ralenti, une alimentation en carburant du moteur 6 est coupée ou un système de contrôle dudit moteur 6 n'est pas alimenté, ce qui permet de détecter une panne du moteur 6 en phase d'approche ou de décollage.

On notera que dans un mode de réalisation particulier non représenté, les moyens 30 et les unités de calcul 16 et 18 peuvent être intégrés dans une unité unique, par exemple un calculateur de commande de vol.

Bien entendu, lorsque les gains Ka, Kd et Ke sont modifiés conformément à l'invention, la gouverne de direction 11 est beaucoup plus sollicitée et répond de façon plus vive à toutes les variations en vitesse de lacet ou en dérapage.

Aussi, pour des raisons de limitation de la fatigue de ladite gouverne de direction 11, ainsi que pour des raisons de confort, dans un mode de mise en oeuvre préféré, les moyens 30 agissent sur l'unité de calcul 28 de sorte qu'elle augmente les valeurs des différents gains précités, en cas de panne d'un moteur 6 ou 7, uniquement lorsque l'avion 1 est en vol et qu'il se trouve dans une configuration de vol, non lisse (décollage ou atterrissage).

Selon l'invention, l'unité de calcul 28 fait revenir les valeurs des différents gains, qui ont été antérieurement modifiées suite à une panne d'un moteur 6 ou 7, aux valeurs nominales représentatives d'un fonctionnement normal, au moins lorsque l'une des conditions suivantes est réalisée :

- l'avion 1 passe en configuration lisse ;
- le moteur 6 ou 7 initialement en panne ne l'est plus et toutes les commandes "moteur" de l'avion 1 ne sont plus au ralenti depuis au moins une durée prédéterminée, par exemple 10 secondes ; et
- pour une altitude de l'aéronef inférieure à une altitude prédéterminée, par exemple 30 mètres, et appelée ci-après altitude critique Zp, seule la condition 2 "moteur en panne" est réalisée (la condition 1 ne l'est pas) et la position du palonnier 14 dépasse une position prédéterminée. A titre d'illustration, dans le cas où aucun ordre au pied correspond à 0° et un ordre "plein pied" à 35 °, ladite position prédéterminée est de préférence égale à 28°.

Selon l'invention, lors d'une panne d'un moteur 6 ou 7, lorsque les conditions suivantes sont réunies simultanément :

- l'avion 1 se trouve à une altitude qui est inférieure à l'altitude critique Zp ; et
- la position du palonnier 14 est située à l'extérieur d'une gamme de positions prédéterminée, délimitée de préférence par 10° et 28°,

l'unité de calcul 28 modifie de façon progressive les valeurs des différents gains précités, pour les ramener, à partir des valeurs modifiées suite à la panne, aux valeurs nominales.

Cette modification progressive permet de concilier, à partir de l'altitude critique Zp et jusqu'à l'atterrissage, deux objectifs, à savoir :

- conserver l'autorité au pied de la loi nominale (du palonnier 14) qui est nécessaire en particulier par fort vent de travers, notamment pour ramener le cas échéant le vecteur vitesse de l'avion 1 dans son axe longitudinal ; et
- maintenir l'action amplificatrice, bien que réduite (progressivement), conforme à l'invention de manière à conserver le même comportement en turbulence et en lacet, quelle que soit l'altitude, et à ne pas perturber le pilotage dans cette phase de vol (atterrissage) délicate.

Par ailleurs, pour déterminer l'altitude réelle de l'avion 1, ce dernier est muni, dans un mode de réalisation particulier, de deux radioaltimètres non représentés.

Selon l'invention, ledit avion 1 est considéré comme présentant une altitude inférieure à l'altitude critique Zp, si l'une des conditions suivantes est réalisée :

a) lorsqu'aucun altimètre n'est en panne : au moins l'un considère que l'altitude réelle Z est inférieure à Zp et, soit les deux considèrent que l'altitude réelle Z est inférieure à 5.Zp, soit, en cas de valeurs divergentes, l'avion 1 est en configuration non lisse ;
b) lorsque l'un des altimètres est en panne : l'autre considère que l'altitude réelle Z est inférieure à Zp et la vitesse de l'avion 1 est inférieure à une vitesse prédéfinie, par exemple 100 m/s ;
c) lorsque les deux altimètres sont en panne : les deux calculateurs LGCIU non représentés qui gèrent les trains d'atterrissage également non représentés considèrent que lesdits trains sont sortis depuis au moins une durée prédéterminée, par exemple 15 secondes ;
d) lorsque les deux altimètres et un calculateur LGCIU sont en panne : l'autre calculateur LGCIU considère que le train d'atterrissage est sorti depuis par exemple 15 secondes et la vitesse de l'avion est inférieure par exemple à 100 m/s ;
e) lorsque les deux altimètres et les deux calculateurs LGCIU sont en panne : l'angle de braquage des volets 9 est supérieur à une valeur prédéterminée.

Ceci permet d'obtenir une estimation fiable de tout passage de l'avion 1 au-dessous de l'altitude critique Zp, quels que soient les problèmes pouvant survenir sur les différents équipements dudit avion 1.

Bien entendu, au lieu d'utiliser des radioaltimètres, on peut simplement utiliser l'une ou plusieurs des conditions c) à e) précitées pour arriver au même résultat.

De préférence, selon l'invention, les valeurs des différents gains précités sont modifiées, c'est-à-dire augmentées ou baissées, de façon progressive, par exemple pendant une durée de deux ou cinq secondes [notamment lors d'un changement de configuration (lisse/non lisse)]. Ceci permet d'atténuer l'effet induit par les modifications, notamment en ce qui concerne le confort.

En plus des avantages précités, le système de commande SC conforme à l'invention assure :

- une homogénéité dans toutes les phases de vol ;
- une conservation des procédures et des manoeuvres de pilotage usuelles, c'est-à-dire qu'il ne modifie pas le pilotage ;
- une mise en oeuvre fiable, indépendante notamment de la vitesse de l'avion 1 ou de l'importance de la dissymétrie induite par la panne d'un moteur 6 ou 7 ;
- une autorité au pied (palonnier 14) pour une altitude au-dessous de l'altitude critique Zp précitée ; et
- un bon maintien du dérapage avec un confort satisfaisant : en approche, sur remise des gaz et au décollage.

## Revendications

1. Système pour la commande en lacet d'un aéronef (1) muni d'une pluralité de moteurs (6, 7), ledit système (SC) comportant :

- au moins un organe de commande (14), pour la commande en lacet, susceptible d'être actionné par un pilote de l'aéronef (1) ;

- des premiers moyens délivrant des signaux électriques représentatifs respectivement de l'assiette latérale commandée $\Phi$c, de la vitesse de roulis p, de l'assiette latérale effective $\Phi$, de la vitesse de lacet r et du dérapage latéral $\beta$ dudit aéronef (1) ;
- une unité de calcul (16) élaborant un ordre électrique dr de commande en lacet, à partir de la relation :

$$dr = Ka.\Phi c + Kb.p + Kc.\Phi + Kd.r + Ke.\beta$$

dans laquelle :

. $\Phi$c, p, $\Phi$, r et $\beta$ sont les valeurs délivrées par lesdits premiers moyens, et
. Ka, Kb, Kc, Kd et Ke sont des gains, dont les valeurs sont susceptibles d'être fixées par des deuxièmes moyens (28) à des valeurs nominales ; et

- un dispositif de transmission (23) permettant de combiner ledit ordre électrique dr de commande en lacet et un ordre mécanique qui provient directement de l'organe de commande (14) par l'intermédiaire d'une transmission mécanique (26) et qui est représentatif de la position dudit organe de commande (14), pour délivrer un ordre unique combiné de commande en lacet qui est destiné à commander une gouverne de direction (11) de l'aéronef (1),

**caractérisé en ce qu'**il comporte de plus des troisièmes moyens (30) pour détecter toute panne d'un desdits moteurs (6, 7) de l'aéronef (1), et **en ce que** lesdits deuxièmes moyens (28) sont formés de manière à augmenter la valeur du gain Kd relatif à la vitesse de lacet r et à modifier les valeurs des gains Ka et Ke relatifs respectivement à l'assiette latérale commandée $\Phi$c et au dérapage latéral $\beta$, lors de la détection par lesdits troisièmes moyens (30) d'une panne d'un moteur (6, 7) de l'aéronef (1).

2. Système selon la revendication 1, ledit système (SC) comportant de plus un transducteur (15) délivrant des signaux électriques PE dépendant de la position dudit organe de commande (14) et représentatifs d'une direction commandée et ladite unité de calcul (16) élaborant de plus un ordre électrique dpequi de commande en roulis, devant être transmis à des ailerons (8) et des spoilers (9) dudit aéronef (1), à partir de la relation :

$$dpequi = Ka1.\Phi c + Kb1.p + Kc1.\Phi + Kd1.r + ke1.\beta + Kf.PE,$$

Ka1, Kb1, Kc1, Kd1, Ke1 et Kf étant des gains,
**caractérisé en ce que** lesdits deuxièmes moyens (28) sont formés de manière à modifier les valeurs des gains Ka1 et Kf relatifs respectivement à l'assiette latérale commandée $\Phi$c et à la direction commandée, lors de la détection par lesdits troisièmes moyens (30) d'une panne d'un moteur (6, 7) de l'aéronef (1), de manière à permettre à l'aéronef (1) de conserver un comportement en roulis similaire à la loi nominale malgré la panne.

3. Système selon l'une des revendications 1 et 2, **caractérisé en ce qu'**il comporte des quatrièmes moyens (34) pour déterminer la configuration de vol actuelle de l'aéronef (1).

4. Système selon l'une des revendications 1 à 3, **caractérisé en ce que** lesdits troisièmes moyens (30) sont formés de manière à détecter une panne d'un moteur (6), pour un aéronef (1) muni de deux moteurs (6, 7), à savoir :

- condition 1 : si le paramètre N1 dudit moteur (6) est supérieur à une valeur prédéterminée et si la différence des paramètres N1 des deux moteurs (6, 7) est supérieure à une valeur prédéterminée, une panne en phase de décollage ; et
- condition 2 : si la différence des paramètres N1 des deux moteurs (6, 7) est supérieure à une valeur prédéterminée et si une seconde condition caractéristique est vérifiée, une panne en phase d'approche.

5. Système selon l'une des revendications 3 et 4, **caractérisé en ce que** lesdits deuxièmes moyens (28) réalisent une modification des valeurs des gains en fonction de la configuration de vol actuelle de l'aéronef (1).

6. Système selon l'une quelconque des revendications 3 à 5, **caractérisé en ce qu'**il comporte des moyens (30) d'action prioritaire qui sont formés de manière à agir sur lesdits deuxièmes moyens (28) de sorte que ces derniers modifient les valeurs des gains, en cas de panne d'un moteur (6, 7), uniquement lorsque l'aéronef (1) est en vol et qu'il se trouve dans une configuration de vol, non lisse.

**7.** Système selon l'une quelconque des revendications 4 à 6, **caractérisé en ce que** lesdits deuxièmes moyens (28) sont formés de manière à remodifier les valeurs des gains, modifiées précédemment à la suite d'une panne d'un moteur (6, 7), pour revenir auxdites valeurs nominales, au moins lorsque l'une des conditions suivantes est réalisée :

- l'aéronef (1) passe en configuration lisse ;
- le moteur (6, 7) initialement en panne ne l'est plus et toutes les commandes moteur de l'aéronef (1) ne sont plus au ralenti depuis au moins une durée prédéterminée ; et
- pour une altitude de l'aéronef (1) inférieure à une altitude prédéterminée, le moteur (6, 7) en panne ne l'est que pour la condition 2 et pas pour la condition 1 et la position dudit organe de commande (14) dépasse une position prédéterminée.

**8.** Système selon l'une quelconque des revendications précédentes, **caractérisé en ce que** les deuxièmes moyens (28) sont formés de manière à remodifier, de façon progressive, les valeurs des gains, modifiées précédemment à la suite d'une panne d'un moteur (6, 7), pour revenir auxdites valeurs nominales, lorsque les conditions suivantes sont réalisées simultanément :

- l'aéronef (1) se trouve à une altitude qui est inférieure à une altitude prédéterminée ; et
- la position dudit organe de commande (14) est située à l'extérieur d'une gamme de positions prédéterminée.

**9.** Système selon l'une quelconque des revendications précédentes, **caractérisé en ce que** les deuxièmes moyens (28) sont formés de manière à modifier de façon progressive les valeurs des gains.


**Patentansprüche**

**1.** Vorrichtung zur Steuerung des Gierwinkels eines Flugzeuges (1), das über mehrere Triebwerke (6, 7) verfügt, wobei die Vorrichtung (SC) folgende Komponenten aufweist:

- mindestens ein Steuerorgan (14) zur Steuerung des Gierwinkels, das vom Piloten eines Flugzeugs (1) betätigt werden kann;
- erste technische Mittel, die die jeweiligen elektrischen Signale liefern, mit denen der gesteuerte Hängewinkel $\Phi c$ , die Rollgeschwindigkeit $\underline{p}$, der effektive Hängewinkel $\Phi$, die Giergeschwindigkeit $\underline{r}$ und der Schiebewinkel $\beta$ des Flugzeugs (1) angegeben werden;
- eine Rechnereinheit (16), die gemäß folgender Beziehung einen elektrischen Steuerbefehl dr zur Steuerung des Gierwinkels erstellt:

$$dr = Ka.\Phi c + Kb.p + Kc.\Phi + Kd.r + Ke.\beta$$

wobei gilt:

- $\Phi c$, p, $\Phi$, r und $\beta$ sind Werte, die von den ersten technischen Mitteln geliefert werden, und
- Ka, Kb, Kc, Kd und Ke sind Verstärkungsfaktoren, deren Werte von zweiten technischen Mitteln mit Nominalwerten verknüpft werden können; und

- eine Übertragungseinrichtung (23), die es ermöglicht, den elektrischen Steuerbefehl dr zur Steuerung des Gierwinkels und einen mechanischen Steuerbefehl, der durch ein mechanisches Übertragungsmittel (26) direkt vom Steuerorgan (14) kommt und die jeweilige Position des Steuerorgans (14) anzeigt, zu kombinieren, um dann einen einzigen kombinierten Steuerbefehl zur Steuerung des Gierwinkels eines Seitenruders (11) des Flugzeugs (1) zu liefern,

**dadurch gekennzeichnet, dass** sie außerdem dritte technische Mittel (30) aufweist, um jeglichen Ausfall der Triebwerke (6, 7) des Flugzeugs (1) festzustellen, und dass die zweiten technischen Mittel (28) so beschaffen sind, dass sie den Wert des Verstärkungsfaktors Kd relativ zur Giergeschwindigkeit $\underline{r}$ vergrößern und die Verstärkungsfaktoren Ka und Ke relativ zum gesteuerten Hängewinkel Φc beziehungsweise zum Schiebewinkel β ändern, wenn durch die dritten technischen Mittel (30) ein Ausfall eines Triebwerks (6, 7) des Flugzeugs (1) festgestellt wird.

2. Vorrichtung gemäß Anspruch 1, wobei die Vorrichtung (SC) außerdem einen Signalumformer (15) aufweist, der die jeweilige Position des Steuerorgans (14) in elektrische Signale PE umwandelt, die eine gesteuerte Richtung angeben, und die Rechnereinheit (16) außerdem gemäß folgender Beziehung einen elektrischen Steuerbefehl dpequi zur Steuerung des Rollwinkels erstellt, der an die Querruder (8) und Spoiler (9) des Flugzeugs (1) übertragen werden muss:

$$dpequi = Ka1.\Phi c + Kb1.p + Kc1.\Phi + Kd1.r + Ke1.\beta + Kf.PE,$$

wobei Ka1, Kb1, Kc1, Kd1, Ke1 und Kf Verstärkungsfaktoren sind,
**dadurch gekennzeichnet, dass** die zweiten technischen Mittel (28) so beschaffen sind, dass sie die Werte der Verstärkungsfaktoren Ka1 und Kf relativ zum gesteuerten Hängewinkel Φc beziehungsweise zur gesteuerten Richtung so ändern, wenn durch die dritten technischen Mittel (30) ein Ausfall eines Triebwerks (6, 7) des Flugzeugs (1) festgestellt wird, dass das Flugzeug (1) trotz der Panne ein Rollverhalten beibehalten kann, das den Sollvorgaben möglichst genau entspricht.

3. Vorrichtung gemäß eines der Ansprüche 1 und 2,
**dadurch gekennzeichnet, dass** es vierte technische Mittel (34) aufweist, um die aktuelle Flugkonfiguration des Flugzeugs (1) zu bestimmen.

4. Vorrichtung gemäß eines der Ansprüche 1 bis 3,
**dadurch gekennzeichnet, dass** die dritten technischen Mittel (30) so beschaffen sind, dass sie einen Ausfall eines Triebwerks (6) eines Flugzeugs (1) feststellen können, das über zwei Triebwerke (6, 7) verfügt, das heißt:

- Bedingung 1: einen Triebwerksausfall in der Startphase, wenn der Parameter N1 des Triebwerks (6) größer ist als ein vorbestimmter Wert und wenn die Differenz der Parameter N1 der beiden Triebwerke (6, 7) größer ist als ein vorbestimmter Wert; und
- Bedingung 2: einen Triebwerksausfall in der Anflugsphase, wenn die Differenz der Parameter N1 der beiden Triebwerke (6, 7) größer ist als ein vorbestimmter Wert und wenn eine zweite charakteristische Bedingung zutrifft.

5. Vorrichtung gemäß eines der Ansprüche 3 und 4,
**dadurch gekennzeichnet, dass** die zweiten technischen Mittel (28) entsprechend der aktuellen Flugkonfiguration des Flugzeugs (1) die Werte der Verstärkungsfaktoren ändern.

6. Vorrichtung gemäß eines der Ansprüche 3 bis 5,
**dadurch gekennzeichnet, dass** sie übergeordnete Wirkelemente (30) aufweist, die so beschaffen sind, dass sie nur dann auf die zweiten technischen Mittel (28) einwirken, damit diese bei einem Ausfall der Triebwerke (6, 7) die Werte der Verstärkungsfaktoren ändern, wenn das Flugzeug (1) fliegt und sich in einer Flugkonfiguration befindet, die kein Gleitflug ist.

7. Vorrichtung gemäß eines der Ansprüche 4 bis 6,
**dadurch gekennzeichnet, dass** die zweiten technischen Mittel (28) so beschaffen sind, dass sie die Werte der Verstärkungsfaktoren, die zuvor bei einem Ausfall eines Triebwerks (6, 7) geändert wurden, wieder auf die Nominalwerte zurücksetzen, wenn mindestens eine der folgenden Bedingungen zutrifft:

- das Flugzeug (1) geht in den Gleitflug über;
- das ursprünglich ausgefallene Triebwerk (6, 7) läuft wieder, und seit mindestens einer vorbestimmten Zeitspanne stehen die Befehle für das Triebwerk des Flugzeugs (1) nicht mehr auf Leerlauf; und
- bei einer Flughöhe des Flugzeugs (1), die niedriger ist als eine vorbestimmte Flughöhe, ist das Triebwerk (6, 7) nur wegen der vorstehend genannten Bedingung 2 ausgefallen, und nicht wegen der vorstehend genannten Bedingung 1, und die Position des Steuerorgans (14) überschreitet eine vorbestimmte Position.

8. Vorrichtung gemäß eines der vorstehend genannten Ansprüche,
**dadurch gekennzeichnet, dass** die zweiten technischen Mittel (28) so beschaffen sind, dass sie die Werte der Verstärkungsfaktoren, die zuvor bei einem Ausfall eines Triebwerks (6, 7) geändert wurden, schrittweise wieder auf die Nominalwerte zurücksetzen, wenn folgende Bedingungen gleichzeitig zutreffen:

- das Flugzeug (1) befindet sich in einer Höhe, die niedriger ist als eine vorbestimmte Höhe; und
- das Steuerorgan (14) befindet sich in einer Position, die außerhalb eines vorbestimmten Positionsbereichs liegt.

**9.** Vorrichtung gemäß eines der vorstehend genannten Ansprüche,
**dadurch gekennzeichnet, dass** die zweiten technischen Mittel (28) so beschaffen sind, dass sie die Werte der Verstärkungsfaktoren schrittweise ändern.

**Claims**

**1.** A system for the yaw control of an aircraft (1) fitted with a plurality of engines (6, 7), said system (SC) comprising:

- at least one control facility (14), for the yaw control, capable of being actuated by a pilot of the aircraft (1);
- first means delivering electrical signals representative respectively of the controlled roll attitude $\Phi_c$, of the roll rate $\underline{p}$, of the effective roll attitude $\Phi$, of the yaw rate $\underline{r}$ and of the sideslip $\beta$ of said aircraft (1);
- a computation unit (16) formulating an electrical command dr for yaw control, on the basis of the relation:

$$dr = Ka.\Phi_c + Kb.p + Kc.\Phi + Kd.r + Ke.\beta$$

in which:

- $\Phi_c$, p, $\Phi$, r and $\beta$ are the values delivered by said first means, and
- Ka, Kb, Kc, Kd and Ke are gains, the values of which are capable of being fixed by second means (28) at nominal values; and

- a transmission device (23) making it possible to combine said electrical command dr for yaw control and a mechanical command which originates directly from the control facility (14) by way of a mechanical transmission (26) and which is representative of the position of said control facility (14), so as to deliver a single combined command for yaw control which is intended to control a rudder (11) of the aircraft (1),

**characterized in that** it comprises third means (30) for detecting any fault with one of said engines (6, 7) of the aircraft (1), and **in that** said second means (28) are formed in such a way as to increase the value of the gain Kd relating to the yaw rate $\underline{r}$ and to modify the values of the gains Ka and Ke relating respectively to the controlled roll attitude $\Phi_c$ and to the sideslip $\beta$, upon the detection by said third means (30) of a fault with an engine (6, 7) of the aircraft (1).

**2.** The system as claimed in claim 1, said system (SC) moreover comprising a transducer (15) delivering electrical signals PE depending on the position of said control facility (14) and representative of a controlled direction and said computation unit (16) furthermore formulating an electrical command dpequi for roll control, required to be transmitted to ailerons (8) and spoilers (9) of said aircraft (1), on the basis of the relation:

$$dpequi = Ka1.\Phi_c + Kb1.p + Kc1.\Phi + Kd1.r + ke1.\beta + Kf.PE,$$

Ka1, Kb1, Kc1, Kd1, Kel and Kf being gains,
**characterized in that** said second means (28) are formed in such a way as to modify the values of the gains Ka1 and Kf relating respectively to the controlled roll attitude $\Phi_c$ and to the controlled direction, upon the detection by said third means (30) of a fault with an engine (6, 7) of the aircraft (1), in such a way as to allow the aircraft (1) to maintain roll behavior which is similar to the nominal law despite the fault.

**3.** The system as claimed in either of claims 1 and 2,
**characterized in that** it comprises fourth means (34) for determining the current flight configuration of the aircraft (1).

4. The system as claimed in one of claims 1 to 3, **characterized in that** said third means (30) are formed in such a way as to detect a fault with an engine (6), for an aircraft (1) fitted with two engines (6, 7), namely:

- condition 1: if the parameter N1 of said engine (6) is greater than a predetermined value and if the difference of the parameters N1 of the two engines (6, 7) is greater than a predetermined value, a fault in the takeoff phase; and
- condition 2: if the difference of the parameters N1 of the two engines (6, 7) is greater than a predetermined value and if a second characteristic condition is satisfied, a fault in the approach phase.

5. The system as claimed in either of claims 3 and 4, **characterized in that** said second means (28) carry out a modification of the values of the gains as a function of the current flight configuration of the aircraft (1) .

6. The system as claimed in any one of claims 3 to 5, **characterized in that** it comprises means (30) of priority action which are formed in such a way as to act on said second means (28) so that the latter modify the values of the gains, in the case of a fault with an engine (6, 7), only when the aircraft (1) is in flight and when it is in an unsteady flight configuration.

7. The system as claimed in any one of claims 4 to 6, **characterized in that** said second means (28) are formed in such a way as to remodify the values of the gains, modified previously following a fault with an engine (6, 7), so as to return to said nominal values, at least when one of the following conditions is realized:

- the aircraft (1) switches to a steady configuration;
- the engine (6, 7) initially faulty is no longer so and all the engine controls of the aircraft (1) have no longer been idling for at least a predetermined duration; and
- for an altitude of the aircraft (1) which is less than a predetermined altitude, the faulty engine (6, 7) is so only in respect of condition 2 and not in respect of condition 1 and the position of said control facility (14) exceeds a predetermined position.

8. The system as claimed in any one of the preceding claims, **characterized in that** the second means (28) are formed in such a way as to remodify, progressively, the values of the gains, previously modified following a fault with an engine (6, 7), so as to return to said nominal values, when the following conditions are simultaneously realized:

- the aircraft (1) is at an altitude which is less than a predetermined altitude; and
- the position of said control facility (14) lies outside a predetermined range of positions.

9. The system as claimed in any one of the preceding claims, **characterized in that** the second means (28) are formed in such a way as to modify the values of the gains progressively.

FIG.1

EP 1 026 565 B1

FIG.2

35A

35B

SC

EP 1 026 565 B1